(19) Europäisches Patentamt / European Patent Office / Office européen des brevets

(11) **EP 2 718 689 B1**

(12) **EUROPÄISCHE PATENTSCHRIFT**

(45) Veröffentlichungstag und Bekanntmachung des Hinweises auf die Patenterteilung:
**09.12.2015  Patentblatt 2015/50**

(51) Int Cl.:
*G01M 15/10* (2006.01)      *G01M 15/05* (2006.01)

(21) Anmeldenummer: **11797197.8**

(86) Internationale Anmeldenummer:
**PCT/EP2011/006251**

(22) Anmeldetag: **10.12.2011**

(87) Internationale Veröffentlichungsnummer:
**WO 2012/167810 (13.12.2012 Gazette 2012/50)**

(54) **VERFAHREN ZUR ÜBERWACHUNG EINES IN EINEM KRAFTFAHRZEUG INSTALLIERTEN SUBSYSTEMS**

METHOD FOR MONITORING A SUBSYSTEM INSTALLED IN A MOTOR VEHICLE

PROCÉDÉ DE SURVEILLANCE D'UN SOUS-SYSTÈME INSTALLÉ À BORD D'UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.06.2011   DE 102011103699**

(43) Veröffentlichungstag der Anmeldung:
**16.04.2014   Patentblatt 2014/16**

(73) Patentinhaber: **Daimler AG**
**70327 Stuttgart (DE)**

(72) Erfinder:
• **SCHANKULA, Herbert**
**73734 Esslingen (DE)**

• **RICHTER, Markus**
**70771 Leinfelden-Echterdingen (DE)**

(74) Vertreter: **JENSEN & SON**
**366-368 Old Street**
**London**
**EC1V 9LT (GB)**

(56) Entgegenhaltungen:
EP-A2- 1 760 623      WO-A1-2005/093668
DE-A1- 19 548 684     DE-A1-102009 014 624
US-A1- 2009 030 570

**Beschreibung**

Die Erfindung betrifft ein Verfahren zur Überwachung eines in einem Kraftfahrzeug installierten Subsystems nach dem Oberbegriff des Anspruchs 1.

In Kraftfahrzeugen installierte Subsysteme, wie beispielweise Kühlmittelsysteme, Schmierstoffsysteme, Insassenrückhaltesysteme oder andere Sicherheitssysteme und dergleichen unterliegen meist einer Überwachung auf eine ordnungsgemäße Funktion bzw. auf Systemfehler. Üblicherweise wird ein Systemfehler dem Fahrer des Kraftfahrzeugs angezeigt und er wird zur Behebung des Fehlers aufgefordert.

So ist beispielsweise in der DE 195 48 684 A1 ein Verfahren beschrieben, bei welchem abgasrelevante Fehlfunktionen eines Kraftfahrzeugs mit Brennkraftmaschine mit Hilfe bordeigener Sensormittel erfasst, dokumentiert, in einer Schaltungseinheit ausgewertet und gegebenenfalls durch eine Störleuchte angezeigt werden.

In US 200 930 570 wird ein Verfahren offenbart, zur Überwachung von Systemfehlern in einem kraftfahrzeug mit einem Restriktionsbetriebs moders bei erkannten System lehleren.

Bei einigen Fehlern kann es aus gesetzlichen oder Haftungsgründen erforderlich sein, eine Systemfehlerbehebung sicherzustellen. Dies kann auch dann gelten, wenn die Systemfehlerbehebung zwar scheinbar oder auch tatsächlich vorgenommen wird aber ein unzulässiger Eingriff in das überwachte Subsystem erfolgt ist, welcher beispielsweise die Anzeige des Systemfehlers vorübergehend deaktiviert, insbesondere ohne dass die dem Systemfehler zugrunde liegende Ursache in der vorgesehenen Weise behoben wird. Ein solcher Eingriff ist als nicht zu tolerierender Missbrauch anzusehen.

Aufgabe der Erfindung ist es, ein Verfahren zur Überwachung eines in einem Kraftfahrzeug installierten Subsystems anzugeben, welches eine Erkennung einer missbräuchlichen System-Manipulation möglichst sicher ermöglicht.

Diese Aufgabe wird durch ein Verfahren mit den Merkmalen des Anspruchs 1 gelöst.

In dem erfindungsgemäßen Verfahren überprüft eine Diagnoseeinheit das zu überwachende Subsystem zumindest während Fahrzyklen des Kraftfahrzeugs in Bezug auf Systemfehler. Charakteristischerweise erfolgt die Überprüfung in Bezug sowohl auf ein Auftreten als auch eine Behebung eines Systemfehlers. Dabei führt die Diagnoseeinheit auf der Grundlage einer Häufigkeit für ein Erkennen des Auftretens und/oder der Behebung des Systemfehlers eine Missbrauchsabschätzung dahingehend durch, ob dem erkannten Auftreten und/oder der erkannten Behebung des Systemfehlers ein Missbrauch zugrunde liegt. Bei einem erkannten Auftreten eines Systemfehlers wird ein Restriktionsbetriebsmodus aktiviert oder ein aktivierter Restriktionsbetriebsmodus fortgeführt, bei welchem eine Fahrbarkeit des Fahrzeugs nach Ablauf einer vorgebbaren Anzahl von Fahrzyklen oder nach Ablauf einer vorgebbaren Fahrstrecke ohne Erkennung der Systemfehlerbehebung eingeschränkt wird.

Die Erfindung beruht auf der Erkenntnis, dass im Falle des Erkennens eines Systemfehlerauftretens oder einer Systemfehlerbehebung im Einzelfall meist keine zuverlässige Missbrauchserkennung möglich ist. Demgegenüber kann im Fall von mehrfachem Auftreten oder Beheben eines Systemfehlers innerhalb einer bestimmten Zeitspanne, Fahrstrecke oder einer Mehrzahl von vorzugsweise aufeinander folgenden Fahrzyklen durch Bewertung der Häufigkeit dieser Ereignisse ein Missbrauch mit hoher Sicherheit erkannt oder auch ausgeschlossen werden. Zur Beurteilung des Vorliegens von Missbrauch können mit Vorteil auch statistische Methoden angewendet werden, welche die Häufigkeit der erkannten Ereignisse betreffend Auftreten und/oder Behebung des Systemfehlers bewerten. Die Häufigkeit kann dabei im Sinne einer absoluten Häufigkeit, d.h. als Anzahl von Ereignisseen betreffend Auftreten und/oder Behebung des Systemfehlers innerhalb einer bestimmten Zeitspanne, Fahrstrecke oder einer Anzahl von vorzugsweise aufeinander folgenden Fahrzyklen als Grundlage für die Missbrauchsäbschätzung dienen. Es kann jedoch auch eine relative Häufigkeit herangezogen werden, bei welcher die erfasste Anzahl von Ereignisseen betreffend Auftreten und/oder Behebung des Systemfehlers in Bezug zu einer anderen Anzahl von Fahrzyklen, insbesondere zu einer Gesamtzahl von Fahrzyklen oder zu einer Anzahl von Fahrzyklen ohne Fehlererkennung betrachtet wird. Ein Missbrauch wird als gegeben angesehen, wenn das Auftreten oder die Behebung eines Systemfehlers auf einen vom Fahrzeugnutzer auf unzulässige Weise vorgenommenen, insbesondere absichtlich durchgeführten Eingriff im Subsystem zurückzuführen ist. Als ein solcher ist beispielsweise das absichtliche Abschalten einer Überwachungsfunktion oder einer Systemkomponente ohne eine technisch sinnvolle Grundlage hierfür anzusehen.

Erfindungsgemäß überprüft die vorgesehene Diagnoseeinheit das Subsystem zumindest während Fahrzyklen des Kraftfahrzeugs. Dabei ist unter einem Fahrzyklus eine insbesondere ununterbrochene Zeitspanne zwischen einem Motorstart und einem darauffolgendem Motorabschalten anzusehen, welche einen Fahrbetrieb des Fahrzeugs umfasst. Der Zustand der Betriebsbereitschaft für das Fahrzeug bzw. den Motor oder das Subsystem (Zündung ein) ist dabei vorzugsweise mit inbegriffen.

Zur Erkennung des Auftretens oder der Behebung eines Systemfehlers kann die Diagnoseeinheit Signale von Sensoren und/oder Betriebszustandsgrößen des Kraftfahrzeugs bzw. des Motors erfassen und verarbeiten. Wird das Auftreten eines Systemfehlers erkannt, so wird ein Restriktionsbetriebsmodus aktiviert oder für den Fall dass dieser bereits aktiviert ist, fortgeführt. Der Restriktionsbetriebsmodus sieht dabei vor, die Fahrbarkeit des Fahrzeugs nach Ablauf einer vorgebbaren Anzahl von Fahrzyklen oder nach Ablauf einer vorgebbaren Fahrstrecke ohne Erkennung einer Systemfehlerbehebung einzuschränken. Vorzugsweise wird dies dem Bediener des Fahrzeugs angezeigt. Die Einschränkung des Fahrbetriebs kann beispielsweise eine Beschränkung der Motorleistung, der Fahrgeschwindigkeit oder eine Verhinderung eines erneuten Motorstarts nach Abschalten des Motors umfassen. Erfolgt bei aktiviertem Restriktionsbetriebsmodus keine rechtzeitige Behebung des Systemfehlers, so ist vorgesehen, die Einschränkung des Fahrbetriebs automatisch wirksam werden zu lassen.

Bei dem überwachten Subsystem des Kraftfahrzeugs kann es sich beispielsweise um ein Kühlmittelsystem, ein Schmierstoffsystem, ein Insassenrückhaltesystem oder ein anderes Sicherheitssystem handeln. Es können auch Subsysteme überwacht werden, welche ihrerseits Funktionsprüfungen, beispielsweise in Bezug auf Überladung des Fahrzeugs, Fahrzeugtürverriegelung und dergleichen durchführen.

In Ausgestaltung der Erfindung ist das überwachte Subsystem ein einem Verbrennungsmotor des Kraftfahrzeugs zugeordnetes Abgasnachbehandlungssystem. Dieses kann Abgasreinigungskatalysatoren, Partikelfilter und Komponenten für deren ordnungsgemäßem Betrieb, wie beispielweise Abgassensoren, Ventile usw. umfassen.

In einer bevorzugten Ausgestaltung der Erfindung handelt es sich bei dem überwachten Subsystem um ein SCR-Abgasnachbehandlungssystem zur Verminderung von im Abgas des Verbrennungsmotors enthaltenen Stickoxiden und die Diagnoseeinheit überprüft das SCR-Abgasnachbehandlungssystem in Bezug auf verbrauchsrelevante Systemfehler, welche im Vergleich zu einem fehlerfreien SCR-Abgasnachbehandlungssystem einen signifikant verminderten Verbrauch eines zur Stickoxidverminderung vorgesehenen SCR-Reduktionsmittels zur Folge haben.

Typischerweise umfasst das SCR-Abgasnachbehandlungssystem einen so genannten SCR-Katalysator, welcher eine Reduktion von Stickoxiden bei Sauerstoffüberschuss mittels des Reduktionsmittels katalysieren kann. Das Reduktionsmittel wird dabei in einem Vorratsbehälter an Bord des Kraftfahrzeugs vorgehalten und mittels eines Dosiersystems dem Abgas stromauf des SCR-Katalysators zur Stickoxidreduktion zugeführt. Als Reduktionsmittel wird typischerweise wässrige Harnstofflösung eingesetzt. Es können jedoch auch andere, insbesondere ammoniakhaltige Reduktionsmittel wie Festharnstoff, Carbamat, Amine, ammoniakhaltige Komplexverbindungen oder dergleichen verwendet werden. Dosiersystem, Vorratsbehälter, Katalysator und weitere zum ordnungsgemäßen Betrieb des SCR-Abgasnachbehandlungssystems eingesetzte Komponenten werden dabei dem SCR-Abgasnachbehandlungssystem zugerechnet. Die Komponenten des SCR-Abgasnachbehandlungssystems werden von der Diagnoseeinheit wenigstens teilweise auf ihre Funktion überwacht bzw. überprüft.

Der Verbrauch des Reduktionsmittels ist mit Betriebskosten verbunden. Es ist daher vorgesehen, mittels der Diagnoseeinheit einen Missbrauch, welcher einer Vermeidung oder Verminderung dieser Betriebskosten dient, zu erkennen. Ist der Verbrauch des Reduktionsmittels gegenüber einer für einen jeweiligen Betriebszustand üblichen Menge signifikant vermindert, so ist auch die vorgesehene oder vorgeschriebene Stickoxidverminderung beeinträchtigt oder verhindert. Aus diesem Grund werden erkannte Fehler im SCR-Abgasnachbehandlungssystem erfasst und vorzugsweise angezeigt. Unter einer signifikanten Verbrauchsverminderung ist dabei eine Verminderung um wenigstens 20 %, vorzugsweise um wenigstens 30 % oder eine höhere Verminderung gegenüber der für ein fehlerfrei arbeitendes SCR-Abgasnachbehandlungssystem vorgesehenen Menge zu verstehen. Insbesondere ist darunter ein auf wenigstens annähernd Null verminderter Verbrauch des SCR-Reduktionsmittels zu verstehen. Um eine Fehlerbehebung mit einiger Sicherheit zu veranlassen, wird vorzugsweise gleichzeitig mit der Erkennung des Fehlers ein Restriktionsbetriebsmodus aktiviert bzw. fortgeführt. Dabei ist ein Missbrauch, welcher eine unzulässige Verzögerung oder eine Vermeidung der Fehlerbehebung zur Folge hätte, auszuschließen. Gleichfalls auszuschließen bzw. zu erkennen ist ein Missbrauch, welcher das Eintreten der Fahrbarkeitsbeschränkung verhindert, ohne dass die zugrunde liegende signifikante Reduktionsmittelverbrauchsverminderung dauerhaft beseitigt wurde

Hierfür ist es in einer besonders vorteilhaften weiteren Ausgestaltung der Erfindung vorgesehen, dass für die Diagnoseeinheit ein Speicher vorgesehen ist, der Speicherplätze für zumindest in den Fahrzyklen ermittelte Statusinformationen aufweist, wobei die Statusinformationen wenigstens das Auftreten und/oder die Behebung eines verbrauchsrelevanten Systemfehlers und/oder die Aktivschaltung des Restriktionsbetriebsmodus betreffen und Statusinformationen für eine Vielzahl von aufeinanderfolgenden Fahrzyklen im Speicher gespeichert werden und wenigstens teilweise für die Missbrauchsabschätzung herangezogen werden. Infolge der erfindungsgemäß vorgesehenen Vielzahl von Speicherplätzen für Statusinformationen kann besonders zuverlässig die Häufigkeit einer Systemfehlererkennung bzw. -Behebung erfasst und ausgewertet und somit ein Missbrauch besonders zuverlässig erkannt werden. In vorteilhafter Weise ist auch eine statistische Auswertung von über eine Vielzahl von Fahrzyklen abgespeicherten Statusinformationen ermöglicht.

In weiterer Ausgestaltung der Erfindung wird bei aktiviertem Restriktionsbetriebsmodus eine Anzahl von für normalen Fahrzeugbetrieb zugelassenen verbleibenden Motorstartvorgängen oder eine Größe einer verbleibenden Restfahrstrecke beginnend mit einem vorgebbaren Startwert dekrementiert. Unter für normalen Fahrzeugbetrieb zugelassenen Motorstartvorgängen sind dabei vorzugsweise solche Motorstarts zu verstehen, welche vorgegebene Randbedingungen erfüllen, welche beispielsweise eine sich anschließende Mindestfahrstrecke oder Mindestmotorbetriebszeit beinhalten. Damit kann eine vorzeitige Einschränkung des Fahrbetriebs ohne wirkliches Verschulden des Fahrzeugnutzers vermieden werden. Die Aktivierung und der Verlauf des Restriktionsbetriebsmodus werden vorzugsweise dem Fahrer des Fahrzeugs angezeigt. Dadurch wird er einerseits über das Vorliegen des erkannten Systemfehlers und andererseits über die Folgen von dessen Nichtbehebung informiert.

Bei einer auf Null dekrementierten Anzahl von Motorstartvorgängen oder Restfahrstrecke ist es dem Fahrzeugnutzer unter normalen Umständen nicht mehr möglich einen erneuten Motorstart vorzunehmen oder eine neue Fahrt zu beginnen. Vorzugsweise ist jedoch insbesondere für hierfür autorisiertes Servicepersonal eine Möglichkeit vorgesehen, durch Zugriff auf die Diagnoseeinheit eine oder mehrere weitere Starts bzw. eine Fahrt mit einer insbesondere vorgebbaren weiteren Fahrstrecke zu ermöglichen. Auf diese Weise kann flexibel auf Notsituationen regiert werden. Wird der Systemfehler rechtzeitig vor auf Null dekrementierten zugelassenen verbleibenden Startvorgängen bzw. auf Null dekrementierter Restfahrstrecke behoben, so wird im Allgemeinen der Restriktionsbetriebsmodus von der Diagnoseeinheit automatisch wieder deaktiviert und der Startwert wieder auf seinen vorgebbaren Startwert zurückgesetzt.

Andererseits ist es in weiterer Ausgestaltung der Erfindung vorgesehen, dass in einem Normalbetrieb bei einer erkannten Systemfehlerbehebung eine Deaktivierung des aktivierten Restriktionsbetriebsmodus nur dann zugelassen wird, wenn die Missbrauchsabschätzung ergibt, dass kein Missbrauch vorliegt. Alternativ oder zusätzlich ist vorgesehen, dass eine erkannte Fehlerbehebung als unwirksam gilt, wenn die Missbrauchsabschätzung ergibt, dass ein Missbrauch vorliegt. Damit ist gewährleistet, dass die Systemüberwachung nicht durch insbesondere mehrfachen bzw. fortgesetzten Missbrauch außer Kraft gesetzt werden kann. Der Normalbetrieb ist dabei ein üblicher, für den Nutzer des Fahrzeugs vorgesehener Fahrzeugbetrieb. Hierzu zählt vorzugsweise nicht ein von autorisiertem Servicepersonal oder anderweitig durchgeführter Eingriff in die Diagnoseeinheit oder ein Tausch bzw. eine Wiederherstellung von Systemkomponenten, welche der Wiederherstellung einer durch technische Störungen verhinderten normalen Fahrbarkeit dienen.

Insbesondere um Sicherheitsspielräume zu ermöglichen und Fehlinterpretationen oder Fremdeinflüsse auf eine Entscheidung betreffend die Einschränkung der Fahrbarkeit so weit als möglich auszuschließen, ist es in weiterer Ausgestaltung der Erfindung vorgesehen, dass eine für eine Aktivierung und/oder eine Fortsetzung und/oder eine Deaktivierung des Restriktionsbetriebsmodus relevante Überprüfung auf verbrauchsrelevante Systemfehler ein Vorliegen eines als gültig bewerteten Fahrzyklus mit vorgebbaren Werten für wenigstens eine Mindestfahrdauer und/oder eine Mindestfahrstrecke und/oder eine Fahrzeugmindestgeschwindigkeit und/oder eine Motorstillstandsdauer in einem Fahrzyklus und/oder zwischen zwei Fahrzyklen erfordert. Es können dabei noch zusätzliche Bedingungen definiert und abgefragt werden, welche für das Vorliegen eines als gültig zu bewertenden Fahrzyklus vorliegen müssen. Solange ein Fahrzyklus nicht als gültig bewertet wird, findet nach dieser Ausgestaltung der Erfindung insbesondere keine Dekrementierung der Anzahl von verbleibenden Restartvorgängen bzw. der verbleibenden Restfahrstrecke statt.

Für die Bewertung der Häufigkeit für ein Erkennen des Auftretens und/oder der Behebung des Systemfehlers in Bezug auf einen Missbrauch ist es in weiterer Ausgestaltung der Erfindung vorgesehen, dass im Speicher der Diagnoseeinheit abgespeicherte Statusinformationen in Bezug auf das Vorliegen eines gültigen Fahrzyklus und/oder in Bezug auf eine Aktivschaltung des Restriktionsbetriebsmodus von einer Mehrzahl von zurückliegenden Fahrzyklen für die Missbrauchsabschätzung herangezogen werden. Auf diese Weise kann die Entscheidung bzw. Abschätzung in Bezug auf einen Missbrauch statistisch abgesichert werden.

In weiterer Ausgestaltung der Erfindung ist für die Missbrauchsabschätzung eine Kennzahl vorgesehen, die zumindest für jeden gültigen Fahrzyklus neu ermittelt wird und es wird ein Missbrauch als gegeben betrachtet, wenn die Kennzahl einen vorgebbaren Grenzwert erreicht oder überschreitet. Dadurch ist eine weiter verbesserte Zuverlässigkeit der Missbrauchsabschätzung ermöglicht. Als besonders vorteilhaft hat es sich dabei erwiesen, wenn in weiterer Ausgestaltung der Erfindung die Kennzahl mit der Anzahl von erfassten Ereignissen betreffend das Auftreten und die Behebung von Systemfehlern korreliert. Dies ermöglicht es insbesondere, eine wiederholte Manipulationshandlung mit unerlaubten Eingriffen in das überwachte Subsystem zuverlässig zu erkennen.

In diesem Zusammenhang ist eine weitere Verbesserung der Zuverlässigkeit ermöglicht, wenn in weiterer Ausgestaltung der Erfindung die in zumindest jedem gültigen Fahrzyklus ermittelte Kennzahl in einem dem jeweiligen Fahrzyklus zugeordneten Speicherplatz des Speichers der Diagnoseeinheit abgespeichert wird und zur Ermittlung der einem jeweiligen Fahrzyklus zugeordneten Kennzahl auf den Wert der Kennzahl des vorangegangenen Fahrzyklus zurückgegriffen wird. Zweckmäßig ist es, die Kennzahl bei aufeinander folgenden, insbesondere gültigen Fahrzyklen fortzuschreiben, um dadurch vorsätzlich vorgenommene Systemeingriffe von zufälligen oder ordnungsgemäß erfolgenden Statusänderungen zuverlässig unterscheiden zu können.

Weitere Vorteile, Merkmale und Einzelheiten der Erfindung ergeben sich aus der nachfolgenden Beschreibung bevorzugter Ausführungsbeispiele. Die vorstehend in der Beschreibung genannten Merkmale und Merkmalskombinationen sowie die nachfolgend genannten Merkmale und Merkmalskombinationen sind nicht nur in der jeweils angegeben Kombination sondern auch in anderen Kombinationen oder in der Alleinstellung verwendbar, ohne den Rahmen der Erfindung zu verlassen.

Nachfolgend wird anhand von Tabelle 1 eine vorteilhafte Vorgehensweise in Verbindung mit in der Tabelle angegebenen, in einem Fehlerspeicher einer Diagnoseeinheit eingetragenen Statusinformationen erläutert. Ohne Einschränkung der Allgemeinheit wird dabei davon ausgegangen, dass die Diagnoseeinheit ein SCR-Abgasnachbehandlungssystem eines Kraftfahrzeugverbrennungsmotors speziell in Bezug auf Systemfehler überprüft, welche einen signifikanten Minderverbrauch von für die Stickoxidverminderung vorgesehener Harnstofflösung zur Folge haben. Ein solcher Systemfehler kann beispielsweise in einer Unterbrechung einer Energieversorgung eines Dosiermoduls oder einer Dosiersteuereinheit zur Dosierung der Harnstofflösung bestehen.

Tabelle 1

| Fahrzyklus F Nr. | ... | n | n+1 | n+2 | n+3 | n+4 | ... | n+m | n+m+1 | ... |
|---|---|---|---|---|---|---|---|---|---|---|
| Fehlerbit B | ... | 0 | 0 | 1 | 1 | 1 | ... | 1 | 1 | ... |
| Modusbit M | ... | 0 | 0 | 1 | 1 | 1 | ... | 1 | 1 | ... |
| Reststarts | ... | R | R | R | R-1 | R-2 | ... | 1 | 0 | ... |
| Kennzahl $k_x$ | ... | $k_n$ | $k_{n+1}$ | $k_{n+2}$ | $k_{n+3}$ | $k_{n+4}$ | ... | $k_{n+m}$ | $k_{n+m+1}$ | ... |

Tabelle 1 gibt lediglich beispielhaft und auszugsweise Eintragungen in dem eine Vielzahl von Speicherstellen aufweisenden Speicher der Diagnoseeinheit wieder. Dabei ist die erste Zeile der Anzahl von direkt aufeinanderfolgenden Fahrzyklen F zugeordnet, welche hier fortlaufend von nummeriert sind. In der zweiten Zeile ist für einen jeweiligen Fahrzyklus F ein Fehlerbit B eingetragen, welches angibt, ob ein Systemfehler vorliegt bzw. ob in einer Systemprüfung das Auftreten oder die Behebung eines Systemfehlers erkannt wurde. In der dritten Zeile ist für einen jeweiligen Fahrzyklus F ein Modusbit M eingetragen, welches angibt, ob ein Restriktionsbetriebsmodus aktiviert ist, welcher vorliegend die Anzahl noch verbleibender zugelassener Motorstarts für normalen Fahrbetrieb ohne Zurücksetzen eines gesetzten Fehlerbits B begrenzen würde.

In der vierten Zeile ist eine Anzahl von verbleibenden Reststarts eingetragen, welche nach Ablauf des zugehörigen Fahrzyklus F noch durchgeführt werden können. In der fünften und letzten Zeile ist eine Missbrauchskennzahl $k_x$ eingetragen, die das Ergebnis der von der Diagnoseeinheit durchgeführten Missbrauchsabschätzung für den aktuellen Fahrzyklus F quantitativ angibt.

In den mit einem Motorstart oder mit Bereitstellen der elektrischen Betriebsspannung (Zündung auf "ein") vom Fahrzeugnutzer eingeleiteten und durch Motorabstellen oder mit Abstellen der elektrischen Betriebsspannung (Zündung "aus") beendeten Fahrzyklen F = n und F = n+1 wurde kein Auftreten eines Systemfehlers erkannt, weshalb hier jeweils das Fehlerbit B Null beträgt. Es besteht daher kein Anlass für eine Fehlermeldung oder für das Aktivieren eines Restriktionsbetriebsmodus. Dementsprechend ist für das Modusbit M Null eingetragen und für das Fahrzeug in den Fahrzyklen F = n und F = n+1 jeweils die gleiche vorgebbare Anzahl R von zugelassenen künftigen Startvorgängen vorgesehen. Eine Störanzeige bleibt dabei vorliegend ausgeschaltet.

Im Fahrzyklus F = n+2 wird ein Systemfehler erkannt und demzufolge das Fehlerbit B gesetzt und ein Restriktionsbetriebsmodus aktiviert und das Modusbit M gesetzt. Dabei ist vorgesehen, dem Fahrzeugnutzer die Anzahl der verbleibenden Motorstarts und damit die Aktivierung des Restriktionsbetriebsmodus anzuzeigen und ihn zu einer Fehlerhebung aufzufordern. Sofern, wie vorliegend dargestellt, in den folgenden Fahrzyklen F keine Fehlerbehebung erkannt wird und daher das Fehlerbit B und das Modusbit M gesetzt bleiben, wird die Anzahl der zugelassenen Motorstarts für fortlaufende Fahrzyklen F beginnend vom Startwert R dekrementiert, bis im Fahrzyklus F = n+m+1 die Zahl Null erreicht ist.

Was die Missbrauchskennzahl $k_x$ im x-ten Fahrzyklus F betrifft, so ist vorgesehen, diese zumindest in Abhängigkeit einer Häufigkeit für ein Erkennen des Auftretens und/oder der Behebung des Systemfehlers und damit bevorzugt zumindest in Abhängigkeit von der Anzahl der Eintragungen eines gesetzten Fehlerbits B oder Modusbits M festzulegen. Vorzugsweise werden der Wert der Missbrauchskennzahl $k_{x-1}$ im jeweils vorangegangenen Fahrzyklus F und eine zugeordnete Anzahl von Fahrzyklen F ebenfalls berücksichtigt. Für die Missbrauchskennzahl $k_x$ gilt demnach bevorzugt folgende allgemeine formale Abhängigkeit:

$$k_x = f\left(k_{x-1}, F, \Sigma(M), \Sigma(B)\right)$$

Dabei steht F für die Anzahl von für die Missbrauchsabschätzung herangezogenen Fahrzyklen und $\Sigma(M)$ für die Anzahl der zugeordneten Speicherplätze mit einem gesetzten Modusbit M und $\Sigma(B)$ für die Anzahl der zugeordneten Speicherplätze mit einem gesetzten Fehlerbit B. Es kann auch vorgesehen sein eine oder mehr der Variablen $k_{x-1}$, F, $\Sigma(M)$, $\Sigma(B)$ unberücksichtigt zu lassen oder es können weitere, hier nicht gesondert aufgeführte Statuseintragungen als Variable berücksichtigt werden. Es können verschiedene funktionale Abhängigkeiten f() für die Verknüpfung der bevorzugt berücksichtigten Variablen $k_{x-1}$, F, $\Sigma(M)$, $\Sigma(B)$ vorgesehen sein, welche insbesondere auf einer Bewertung der Häufigkeit für ein Erkennen des Auftretens und/oder der Behebung des Systemfehlers beruhen, also die Häufigkeit der Eintragungen eines gesetzten Fehlerbits B oder Modusbits M berücksichtigen. Dies wird durch die Abhängigkeit der

Missbrauchskennzahl $k_x$ von der Größe E(M) oder einer damit korrelierenden Größe erzielt. Erreicht oder überschreitet die Missbrauchskennzahl $k_x$ einen vorgebbaren oder vorgegebenen Grenzwert, so wird ein Missbrauch als gegeben angesehen. Damit wird in vorteilhafter Weise die Erkenntnis genutzt, dass bei einer vergleichsweise hohen Anzahl bzw. Häufigkeit von Fehlereintragungen eine normale technische Fehlerursache vergleichsweise wenig wahrscheinlich, ein unzulässiger, missbräuchlicher Eingriff hingegen eher wahrscheinlich ist.

Im Anschluss an den Fahrzyklus F = n+m+1, mit welchem die Anzahl möglicher Motorstartvorgänge auf Null dekrementiert wurde, können verschiedene weitere Vorgehensweisen bzw. Reaktionen vorgesehen sein, die vorzugsweise davon abhängen, ob die Missbrauchskennzahl $k_x$ in oder vor diesem Fahrzyklus F den für eine Missbrauchserkennung kritischen Grenzwert bereits erreicht bzw. überschritten hat. Jedenfalls ist vorgesehen, dass ein auf den Fahrzyklus F = n+m+1 unmittelbar folgender Versuch den Motor zu starten zumindest dann erfolglos bleibt, wenn keine Fehlerbehebung erkannt wurde bzw. das Fehlerbit B gesetzt ist. Beispielsweise durch einen von außen erfolgenden autorisierten Serviceeingriff in die Diagnoseeinheit kann ein Rücksetzen der Reststarts auf den Startwert R vorgesehen sein, wonach wieder wenigstens R Motorstartvorgänge ermöglicht werden. Es kann auch ein Rücksetzen auf einen demgegenüber kleineren Startwert R' < R vorgesehen sein, insbesondere dann, wenn während des folgenden Fahrzyklus erneut ein Systemfehler erkannt wird. Durch einen solchen, insbesondere für Ausnahmefälle oder Notsituationen vorgesehenen autorisierten Serviceeingriff kann auch ein Zurücksetzen des Fehlerbits auf Null erlaubt werden. Solche Serviceeingriffe sind bevorzugt hierfür autorisiertem Servicepersonal vorbehalten.

Hat im Fahrzyklus F = n+m+1 die Missbrauchskennzahl $k_x$ den für eine Missbrauchserkennung kritischen Grenzwert bereits erreicht bzw. überschritten, so ist vorzugsweise vorgesehen, ein Rücksetzen der Reststarts lediglich auf einen gegenüber R verringerten Startwert R' < R oder durch einen weiter verringerten Startwert R" < R' durch einen insbesondere autorisierten Serviceeingriff in die Diagnoseeinheit zu erlauben. Dies ist vorzugsweise auch dann vorgesehen, wenn vor einem auf Null dekrementierten Reststartwert zwar eine Fehlerbehebung erkannt und das Fehlerbit B zurückgesetzt wird, jedoch die Missbrauchskennzahl $k_x$ den kritischen Grenzwert bereits erreicht bzw. überschritten hat.

Wird bei aktivierten Restriktionsbetriebsmodus vor einem auf Null dekrementierten Reststartwert eine Fehlerbehebung erkannt und gegebenenfalls das Fehlerbit B zurückgesetzt und hat die Missbrauchskennzahl $k_x$ den kritischen Grenzwert nicht erreicht bzw. überschritten, so ist vorgesehen, den Reststartwert auf den Startwert R und das Modusbit M zurückzusetzen. Dabei ist bevorzugt vorgesehen, die Missbrauchskennzahl $k_x$ nicht zurückzusetzen sondern fortzuschreiben, um nachfolgende Statusänderungen unter Berücksichtigung der Historie zuverlässiger beurteilen zu können.

Es versteht sich, dass der Speicher noch weitere Speicherstellen für weitere Statusinformationen aufweisen kann, was hier nicht gesondert aufgeführt ist. Insbesondere können Speicherzellen für Statusinformationen in Bezug auf eine Gültig-Wertung des aktuellen Fahrzyklus und/oder einer vorgenommenen Systemprüfung usw. vorgesehen sein. Diese können ebenfalls für die Missbrauchsabschätzung und zur Ermittlung der Missbrauchskennzahl $k_x$ herangezogen werden.

Es versteht sich weiter, dass bei einem autorisierten Service infolge eines auf Null dekrementierten Reststartwerts eine Analyse von Systemkomponenten in Bezug auf tatsächliche Fehlfunktionen mit einer technischen Ursache erfolgt. Wird eine technische Fehlerursache festgestellt, so wird im Zuge des autorisierten Servicevorgangs vorzugsweise auch ein Reset der Diagnoseeinträge durchgeführt, welche für die Missbrauchsabschätzung herangezogen werden. Dabei erfolgt bevorzugt auch ein Reset der Missbrauchskennzahl $k_x$.

**Patentansprüche**

1. Verfahren zur Überwachung eines in einem Kraftfahrzeug installierten Subsystems, bei welchem eine Diagnoseeinheit das Subsystem zumindest während Fahrzyklen des Kraftfahrzeugs in Bezug auf Systemfehler überprüft, wobei die Überprüfung in Bezug sowohl auf ein Auftreten als auch eine Behebung eines Systemfehlers erfolgt, wobei bei einem erkannten Auftreten des Systemfehlers ein Restriktionsbetriebsmodus aktiviert oder ein aktivierter Restriktionsbetriebsmodus fortgeführt wird, bei welchem eine Fahrbarkeit des Fahrzeugs nach Ablauf einer vorgebbaren Anzahl von Fahrzyklen oder nach Ablauf einer vorgebbaren Fahrstrecke ohne Erkennung der Systemfehlerbehebung eingeschränkt wird,
   **dadurch gekennzeichnet, dass**
   die Diagnoseeinheit auf der Grundlage einer Häufigkeit für ein Erkennen des Auftretens und/oder der Behebung des Systemfehlers eine Missbrauchsabschätzung dahingehend durchführt, ob dem erkannten Auftreten und/oder der erkannten Behebung des Systemfehlers ein Missbrauch zugrunde liegt.

2. Verfahren nach Anspruch 1,
   **dadurch gekennzeichnet, dass**
   das überwachte Subsystem ein einem Verbrennungsmotor des Kraftfahrzeugs zugeordnetes Abgasnachbehandlungssystem ist.

**3.** Verfahren nach Anspruch 1 oder 2,
**dadurch gekennzeichnet, dass**
das überwachte Subsystem ein SCR-Abgasnachbehandlungssystem zur Verminderung von im Abgas des Verbrennungsmotors enthaltenen Stickoxiden ist und die Diagnoseeinheit das SCR-Abgasnachbehandlungssystem in Bezug auf verbrauchsrelevante Systemfehler überprüft, welche im Vergleich zu einem fehlerfreien SCR-Abgasnachbehandlungssystem einen signifikant verminderten Verbrauch eines zur Stickoxidverminderung vorgesehenen SCR-Reduktionsmittels zur Folge haben.

**4.** Verfahren nach nach einem der Ansprüche 1 bis 3,
**dadurch gekennzeichnet, dass**
für die Diagnoseeinheit ein Speicher vorgesehen ist, der Speicherplätze für zumindest in den Fahrzyklen ermittelte Statusinformationen aufweist, wobei die Statusinformationen wenigstens das Auftreten und/oder die Behebung eines verbrauchsrelevanten Systemfehlers und/oder die Aktivschaltung des Restriktionsbetriebsmodus betreffen und Statusinformationen für eine Vielzahl von aufeinanderfolgenden Fahrzyklen im Speicher gespeichert werden und wenigstens teilweise für die Missbrauchsabschätzung herangezogen werden.

**5.** Verfahren nach einem der Ansprüche 1 bis 4
**dadurch gekennzeichnet, dass**
bei aktiviertem Restriktionsbetriebsmodus eine Anzahl von für normalen Fahrzeugbetrieb zugelassenen verbleibenden Motorstartvorgängen oder eine Größe einer verbleibenden Restfahrstrecke beginnend mit einem vorgebbaren Startwert dekrementiert wird.

**6.** Verfahren nach einem der Ansprüche 1 bis 5,
**dadurch gekennzeichnet, dass**
in einem Normalbetrieb bei einer erkannten Systemfehlerbehebung eine Deaktivierung des aktivierten Restriktionsbetriebsmodus nur dann zugelassen wird, wenn die Missbrauchsabschätzung ergibt, dass kein Missbrauch vorliegt und/oder dass eine erkannte Fehlerbehebung als unwirksam gilt, wenn die Missbrauchsabschätzung ergibt, dass ein Missbrauch vorliegt.

**7.** Verfahren nach einem der Ansprüche 1 bis 6,
**dadurch gekennzeichnet, dass**
eine für eine Aktivierung und/oder eine Fortsetzung und/oder eine Deaktivierung des Restriktionsbetriebsmodus relevante Überprüfung auf verbrauchsrelevante Systemfehler ein Vorliegen eines als gültig bewerteten Fahrzyklus mit vorgebbaren Werten für wenigstens eine Mindestfahrdauer und/oder eine Mindestfahrstrecke und/oder eine Fahrzeugmindestgeschwindigkeit und/oder eine Motorstillstandsdauer in einem Fahrzyklus und/oder zwischen zwei Fahrzyklen erfordert.

**8.** Verfahren nach einem der Ansprüche 4 bis 7,
**dadurch gekennzeichnet, dass**
im Speicher der Diagnoseeinheit abgespeicherte Statusinformationen in Bezug auf das Vorliegen eines gültigen Fahrzyklus und/oder in Bezug auf eine Aktivschaltung des Restriktionsbetriebsmodus von einer Mehrzahl von zurückliegenden Fahrzyklen für die Missbrauchsabschätzung herangezogen werden.

**9.** Verfahren nach einem der Ansprüche 7 oder 8,
**dadurch gekennzeichnet, dass**
für die Missbrauchsabschätzung eine Kennzahl vorgesehen ist, die zumindest für jeden gültigen Fahrzyklus neu ermittelt wird und ein Missbrauch als gegeben betrachtet wird, wenn die Kennzahl einen vorgebbaren Grenzwert erreicht oder überschreitet.

**10.** Verfahren nach Anspruch 9,
**dadurch gekennzeichnet, dass**
die Kennzahl mit der Anzahl von erfassten Ereignissen betreffend das Auftreten und die Behebung von Systemfehlern korreliert.

**11.** Verfahren nach Anspruch 9 oder 10,
**dadurch gekennzeichnet, dass**
die in zumindest jedem gültigen Fahrzyklus ermittelte Kennzahl in einem dem jeweiligen Fahrzyklus zugeordneten Speicherplatz des Speichers der Diagnoseeinheit abgespeichert wird und zur Ermittlung der einem jeweiligen Fahrzyklus zugeordneten Kennzahl auf den Wert der Kennzahl des vorangegangenen Fahrzyklus zurückgegriffen wird.

## Claims

1.  Method for monitoring a subsystem installed in a motor vehicle, wherein a diagnostic unit checks the subsystem for system faults at least during driving cycles of the motor vehicle, wherein the check covers both an occurrence and an elimination of a system fault, wherein, if the occurrence of a system fault is detected, a restriction operating mode is activated or an activated restriction operating mode is continued, in which a drivability of the vehicle is restricted at the end of a presettable number of driving cycles or at the end of a presettable travelling distance without any detection of the elimination of the system fault,
    **characterised in that**
    the diagnostic unit performs, on the basis of the frequency for a detection of the occurrence and/or elimination of the system fault, a misuse assessment to establish whether the detected occurrence and/or the detected elimination of the system fault is due to a misuse.

2.  Method according to claim 1,
    **characterised in that**
    the monitored subsystem is an exhaust treatment system assigned to an internal combustion engine of the motor vehicle.

3.  Method according to claim 1 or 2,
    **characterised in that**
    the monitored subsystem is an SCR exhaust treatment system for reducing nitrogen oxides contained in the exhaust gas of the internal combustion engine, and **in that** the diagnostic unit checks the SCR exhaust treatment system for consumption-relevant system faults, which, compared to a faultless SCR exhaust treatment system, result in a significantly reduced consumption of an SCR reducing agent provided for nitrogen oxide reduction.

4.  Method according to any of claims 1 to 3,
    **characterised in that**
    a memory having memory locations for status information gained at least in the driving cycles is provided for the diagnostic unit, wherein the status information relates at least to the occurrence and/or the elimination of a consumption-relevant system fault and/or to the activation of the restriction operating mode, and wherein status information is stored in the memory for a plurality of successive driving cycles and is at least partially used for the misuse assessment.

5.  Method according to any of claims 1 to 4,
    **characterised in that**
    on the activation of the restriction operating mode, a number of engine start operations or a size of a remaining travelling distance is decremented, starting with a presettable starting value.

6.  Method according to any of claims 1 to 5,
    **characterised in that**
    if a system fault elimination is detected in normal operation, a deactivation of the activated restriction operating mode is permitted only if the misuse assessment finds that there is no misuse, and/or **in that** a detected fault elimination is deemed ineffective if the misuse assessment finds that there is a misuse.

7.  Method according to any of claims 1 to 6,
    **characterised in that**
    a check for consumption-relevant system faults relevant for an activation and/or a continuation and/or a deactivation of the restriction operating mode requires an existence of a driving cycle assessed as valid with presettable values for at least a minimum driving duration and/or a minimum travelling distance and/or a minimum vehicle speed and/or an engine stoppage duration in a driving cycle and/or between two driving cycles.

8.  Method according to any of claims 4 to 7,
    **characterised in that**
    status information stored in the memory of the diagnostic unit and relating to the existence of a valid driving cycle and/or to an activation of the restriction operating mode of a majority of past driving cycles is included in the misuse assessment.

9. Method according to claim 7 or 8,
**characterised in that**
a code number which is established anew at least for every valid driving cycle is provided for the misuse assessment, and **in that** a misuse is deemed to be present if the code number reaches or exceeds a presettable limit value.

10. Method according to claim 9,
**characterised in that**
the code number correlates with the number of detected events relating to the occurrence and the elimination of system faults.

11. Method according to claim 9 or 10,
**characterised in that**
the code number established at least in every valid driving cycle is stored in a location of the memory of the diagnostic unit, which location is assigned to the respective driving cycle, and **in that** the value of the code number of the previous driving cycle is referred to for the determination of the code number assigned to a respective driving cycle.

## Revendications

1. Procédé de surveillance d'un sous-système installé à bord d'un véhicule automobile, dans lequel une unité de diagnostic contrôle le sous-système au moins pendant les cycles de marche du véhicule automobile pour détecter des erreurs du système, le contrôle portant à la fois sur l'occurrence d'une erreur du système et sur son élimination, en cas de détection de l'occurrence de l'erreur du système, un mode de fonctionnement restreint étant activé ou un mode de fonctionnement restreint activé étant poursuivi, dans lequel l'aptitude du véhicule automobile à son usage est restreinte après un nombre prédéfini de cycles de marche ou après une distance prédéfinie parcourue sans détection de l'élimination de l'erreur du système, **caractérisé en ce que** l'unité de diagnostic, en fonction d'une fréquence, exécute une estimation d'une utilisation non conforme pour la détection de l'occurrence et/ou l'élimination de l'erreur du système afin de déterminer si l'occurrence et/ou l'élimination de l'erreur du système qui a été détectée repose sur une utilisation non conforme.

2. Procédé selon la revendication 1, **caractérisé en ce que** le sous-système surveillé est un système de post-traitement des gaz d'échappement associé à un moteur à combustion interne du véhicule automobile.

3. Procédé selon la revendication 1 ou la revendication 2, **caractérisé en ce que** le sous-système surveillé est un système de post-traitement des gaz d'échappement à réduction catalytique sélective destiné à réduire les oxydes d'azote contenus dans les gaz d'échappement du moteur à combustion interne et l'unité de diagnostic contrôle le système de post-traitement de gaz d'échappement à réduction catalytique sélective pour détecter des erreurs de système pertinentes pour la consommation, ledit système en comparaison avec un système de post-traitement des gaz d'échappement à réduction catalytique sélective sans erreur provoque une réduction considérable de consommation de l'agent de réduction SCR destiné à réduire l'oxyde d'azote.

4. Procédé selon l'une quelconque des revendications 1 à 3, **caractérisé en ce qu'**il est prévu une mémoire pour l'unité de diagnostic, ladite mémoire présente des emplacements de mémoire pour au moins des informations d'état obtenues dans les cycles de marche, les informations d'état concernant au moins l'occurrence et/ou l'élimination d'une erreur du système pertinentes pour la consommation et/ou l'activation du mode de fonctionnement restreint et les informations d'état pour une pluralité cycles de marche successifs étant mémorisées dans la mémoire et étant au moins en partie utilisées pour l'estimation d'une utilisation non conforme.

5. Procédé selon l'une quelconque des revendications 1 à 4, **caractérisé en ce que** lorsque le mode de fonctionnement restreint est activé, un certain nombre de phases d'accélération de moteur restantes autorisées pour le fonctionnement normal du véhicule automobile ou la distance du trajet restant commençant par une valeur de départ prédéfinie sera décrémenté(e).

6. Procédé selon l'une quelconque des revendications 1 à 5, **caractérisé en ce qu'**au cours d'un fonctionnement normal en cas d'élimination d'erreur du système détectée une désactivation du mode de fonctionnement restreint activé est seulement autorisée que si l'estimation d'utilisation non conforme révèle qu'aucune utilisation non conforme

9

n'existe et/ou qu'une élimination d'erreur détectée est inefficace lorsque l'estimation d'utilisation non conforme révèle qu'une utilisation non conforme existe.

7. Procédé selon l'une quelconque des revendications 1 à 6, **caractérisé en ce qu'**un contrôle pertinent pour une activation et/ou une poursuite et/ou une désactivation du mode de fonctionnement restreint portant sur des erreurs du système pertinentes pour la consommation exige l'existence d'un cycle de marche évalué comme valide avec des valeurs prédéfinies pour au moins une durée de marche minimum et/ou un trajet minimum et/ou une vitesse minimum de véhicule et/ou une durée d'arrêt de moteur dans un cycle de marche et/ou entre deux cycles de marche.

8. Procédé selon l'une quelconque des revendications 4 à 7, **caractérisé en ce que** des informations d'état relatives à l'existence d'un cycle de marche valide et/ou relatives à une activation du mode de fonctionnement restreint mémorisées dans la mémoire de l'unité de diagnostic sont utilisées par une pluralité de cycles de marche précédents pour l'estimation d'utilisation non conforme.

9. Procédé selon l'une quelconque des revendications 7 ou 8, **caractérisé en ce qu'**il est prévu une caractéristique pour l'estimation d'utilisation non conforme qui au moins pour chaque cycle de marche valide est à nouveau déterminée et une utilisation non conforme est considérée comme prise en compte lorsque la caractéristique atteint ou dépasse une valeur limite prédéfinie.

10. Procédé selon la revendication 9, **caractérisé en ce que** la caractéristique est en corrélation avec le nombre d'événements détectés concernant l'occurrence ou l'élimination d'erreurs du système.

11. Procédé selon la revendication 9 ou 10, **caractérisé en ce que** la caractéristique déterminée dans au moins chaque cycle de marche valide est mémorisé dans un emplacement de mémoire associé à chacun des cycles de marche de la mémoire de l'unité de diagnostic et qu'on recourt à la valeur de la caractéristique du cycle de marche précédent pour déterminer la caractéristique associée à chacun des cycles de marche.

**IN DER BESCHREIBUNG AUFGEFÜHRTE DOKUMENTE**

**In der Beschreibung aufgeführte Patentdokumente**

- DE 19548684 A1
- US 200930570 B